# EUROPÄISCHE PATENTSCHRIFT

(11) **EP 0 592 700 B1**
(45) Veröffentlichungstag und Bekanntmachung des Hinweises auf die Patenterteilung: **13.12.1995**
(21) Anmeldenummer: 92117390.2
(22) Anmeldetag: 12.10.1992
(51) Int. Cl.: A47J 47/16

(54) **Gewürzbehälter**
Spice container
Récipient d'épice

(43) Veröffentlichungstag der Anmeldung: 20.04.1994
(73) Patentinhaber: LEIFHEIT Aktiengesellschaft, D-56377 Nassau (DE)
(72) Erfinder: Brand, Dieter, W-5427 Bad Ems (DE)

(56) Entgegenhaltungen:
- DE-U- 8 104 395
- DE-U- 8 625 473
- US-A- 4 905 949

## Beschreibung

Die Erfindung betrifft eine Vorrichtung zur Aufbewahrung von Gewürzen und dergleichen entsprechend dem Oberbegriff des Anspruchs 1.

Bei einem älteren Vorschlag der Anmelderin wird der Behälter am Verschlußkörper bzw. an einem Halter durch magnetische Anziehungskraft gehalten. Diese Ausführung ermöglicht zwar gegenüber den üblichen Schraubverschlüssen bzw. gegenüber Vorrichtungen (DE-GM81 04 395), bei denen der Halter mit Innengewinden versehen ist, in weiche die mit einem Außengewinde versehenen Behälter eingeschraubt werden können, eine einfachere Handhabung, sie ist jedoch wegen der Magnetteile und deren Befestigung verhältnismäßig teuer. Die metallischen Magnetteile sind außerdem korrosionsanfällig.

Aufgabe der Erfindung ist es, eine Vorrichtung der gattungsgemäßen Art zu schaffen, die ebenfalls eine einfache Handhabung des Gewürzbehälters gestattet, jedoch kostengünstiger herstellbar ist und keine Korrosionsprobleme hat, so daß ihre Teile in einer Spülmaschine gereingt werden können.

Diese Aufgabe wird erfindungsgemäß durch die im Kennzeichen des Anspruchs 1 angegebenen Merkmale gelöst.

Bei dem erfindungsgemäßen Vorschlag wird beim Aufsetzen des Verschlußkörpers bzw. beim Einstecken des Behälters in die Halterung der Rand der öffnung in dem elastischen Element aufgebogen, bis er hinter die Umfangswulst am Behälter schnappt. Dann ist der Behälter sicher mit dem Verschlußkörper bzw. mit der Halterung verbunden. Zum Gebrauch wird der Behälter vom Verschlußkörper bzw. von der Halterung unter Verformung des Randes der öffnung in dem elastischen Element abgezogen. Da keine Metallteile benötigt werden, besteht auch keine Korrosionsgefahr. Durch das elastische Element wird auch eine bessere Aromadichtigkeit als bei einem Magnetverschluß erreicht, die durch eine auf den Behälterhals aufgesetzte Verschlußkappe weiter verbessert werden kann.

Die Umfangswulst kann am Behälterhals vorgesehen werden, wobei ihr Außendurchmesser größer sein sollte als der Außendurchmesser der Streukappe, um das Aufsetzen des Verschlußkörpers bzw. das Einführen in die Halterung zu erleichtern. Alternativ kann die Umfangswulst von dem Rand der Streukappe begrenzt werden, so daß dann der Rand der öffnung in dem elastischen Element die Streukappe hintergreift.

Vorzugsweise ist das elastische Element ein Ring, der an seinem Außenumfang in dem Verschlußkörper bzw. in der Halterung festgehalten ist.

Bei der Anwendung des erfindungsgemäßen Vorschlages auf eine Vorrichtung mit Verschlußkörper kann dieser einen kappenförmigen Abschnitt und einen daran anschließenden Abschnitt größeren Durchmessers aufweisen, der einen von einer Umfangswand begrenzten Ringraum zur Aufnahme des elastischen Ringes bildet. Zur Halterung dieses Ringes dient ein Haltering, der in den Ringraum eingesetzt und dort fixiert wird, beispielsweise durch radial nach innen vorstehende Vorsprünge oder eine radial nach innen vorstehende Wulst an der genannten Umfangswand, die zu diesem Zweck aus entsprechend nachgiebigem Material bestent. Wenn es erwüscht ist, daß der Kraftaufwand zum Abziehen des Behälters kleiner sein soll als zum Aufstecken, kann der Haltering mit einem größeren Innendurchmesser ausgeführt werden als der kappenförmige Abschnitt des Verschlußkörpers. Der elastische Ring ist dadurch in Abzugsrichtung weicher als in Aufsteckrichtung. Der Haltering kann einen nach unten vorstehenden Ansatz aufweisen, so daß er, beispielsweise durch konische Ausbildung seiner Innenfläche, die Einführung des Behälters in den Verschlußkörper erleichtert.

Der Halter kann zur Aufnahme von mehreren Behältern ausgebildet sein, und er weist zu diesem Zweck eine Platte auf, die mit einer der Anzahl der aufzunehmenden Behältern entsprechenden Anzahl von Durchbrüchen versehen ist. Jeder Durchbruch ist von einem elastischen Element umgeben, das eine öffnung aufweist, deren Rand die Umfangswulst am Behälter hintergreift. Diese Element kann wiederum ein Ring sein, in welchem Fall ähnlich wie bei dem Verschlußkörper jeder Durchbruch mit Abstand von einer kreisförmigen Umfangswand umgeben ist, die einen Ringraum zur Aufnahme des elastischen Ringen begrenzt, in den ein Haltering eingreift, der den elastischen Ring in dem Ringraum hält. Der Haltering kann hierbei Bestandteil der Platte sein.

In einer bevorzugten Ausführung ist das elastische Element ein Band, das sich im wesentlichen über die ganze Länge der Platte erstreckt und im Bereich der vorzugsweise kreisförmigen Durchbrüche in der Platte kreisförmige öffnungen aufweist, deren Ränder die Umfangswülste an den Behältern hintergreifen. Der Vorteil dieses Vorschlages liegt darin, daß nur ein einziges elastisches Element für alle Behälter erforderlich ist. Er ermöglicht auch eine sehr einfache Befestigung des elastischen Elements ohne zusätzliche Teile, indem in der vorzugsweise aus Kunststoff bestehenden Platte ein sich im wesentlichen über deren ganze Länge erstreckender Schlitz vorgesehen wird, der die Durchbrüche schneidet und in den das elastische Band einfach eingesteckt wird. Wenn es bei dieser Ausführung erwünscht ist, daß der Kraftaufwand zum Einschieben der Behälter geringer sein soll als zum Abnehmen, können die Durchbrüche in der unteren Wand des Schlitzes einen kleineren Durchmesser erhalten als die Durchbrüche in der oberen Wand. Zur Erleichterung des Einführens der Behälter können an der unteren Wand zylindrische Ansätze angeformt sein, welche die Durchbrüche in dieser Wand umgeben und deren Innenflächen sich in Richtung auf die Behälter hin konisch erweitern können.

Um die Köpfe der Behälter vor Verschmutzung zu schützen und den ästhetischen Eindruck zu verbessern , kann an der Schiene eine die Behälterköpfe abdeckende Haube angeformt sein.

Ein dichter Abschluß der einzelnen Behälter kann erreicht werden, wenn die Oberseite der Platte mit kappenartigen Anformungen versehen wird, in welche die Köpfe der Behälter hineinragen

Einige Ausführungsbeispiele der Erfindung werden im folgenden unter Bezugnahme auf die Zeichnungen beschrieben. Es zeigt:
- Fig. 1: einen Längsschnitt eines auf einen Gewürzbehälter aufgesetzen Verschlußkörpers entsprechend einem ersten Ausführungsbeispiel,
- Fig. 2: einen Längsschnitt ähnlich Fig. 2 entsprechend einem zweiten Ausführungsbeispiel, und
- Fig. 3: einen Querschnitt eines Halters für eine Mehrzahl von Gewürzgläsern.

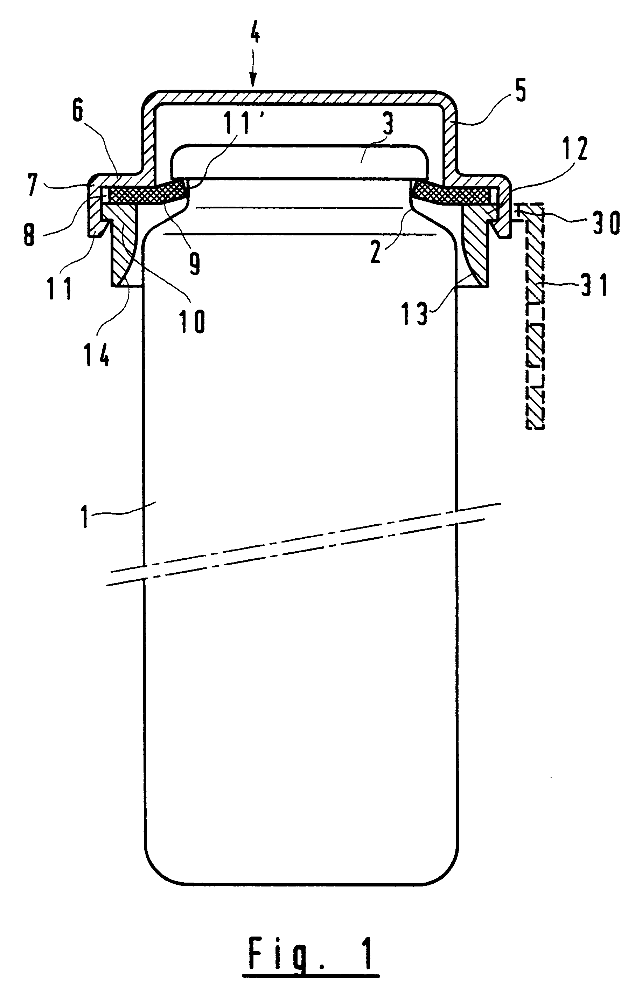

Es sei zunächst auf Fig. 1 bezuggenommen, die einen Gewürzbehälter 1 mit einem Hals 2 zeigt, auf den eine Streukappe 3 aufgesetzt ist, die den Hals 2 seitlich überragt. Der Behälter 1 ist durch einen Verschlußkörper 4 verschlossen, der einen kappenartigen Abschnitt 5 und einen sich daran anschließenden ringförmigen Abschnitt 6 größeren Durchmessers aufweist, welcher einen von einer Umfangswand 7 begrenzten Ringraum 8 bildet. In dem Ringraum 8 ist ein elastisches Element in Form eines flachen Ringes 9 angeordnet, der durch einen Haltering 10 in dem Ringraum 8 gehalten wird. Der Innendurchmesser des Ringes 9 ist geringfügig kleiner als der Außendurchmesser der Streukappe 3, so daß der Innenrand 11' des Ringes 9 beim Einschieben des Behälters durch die Streukappe 3 nach oben gebogen wird und dann die Streukappe 3 hintergreift, wie dies in Fig. 1 dargestellt ist. Der Haltering 10 wird dadurch fixiert, daß an der Umfangswand 7 eine radial nach innen gerichtete Wulst 11 (oder einzelne Vorsprünge) vorgesehen ist, die den Rand 12 des Halteringes 10 übergreift, was aufgrund des flexiblen Materials des Verschlußkörpers möglich ist. Der Innendurchmesser des Halteringes 10 ist größer als der Innendurchmesser des kappenförmigen Abschnittes 5, wodurch erreicht wird, daß zum Herausziehen des Behälters aus dem Verschlußkörper 4 ein geringerer Kraftaufwand erforderlich ist als zum Einschieben. Der Haltering 10 hat einen zylindrischen Fortsatz 13 mit einer konischen Innenfläche 14, wodurch das Einführen des Behälters erleichtert wird.

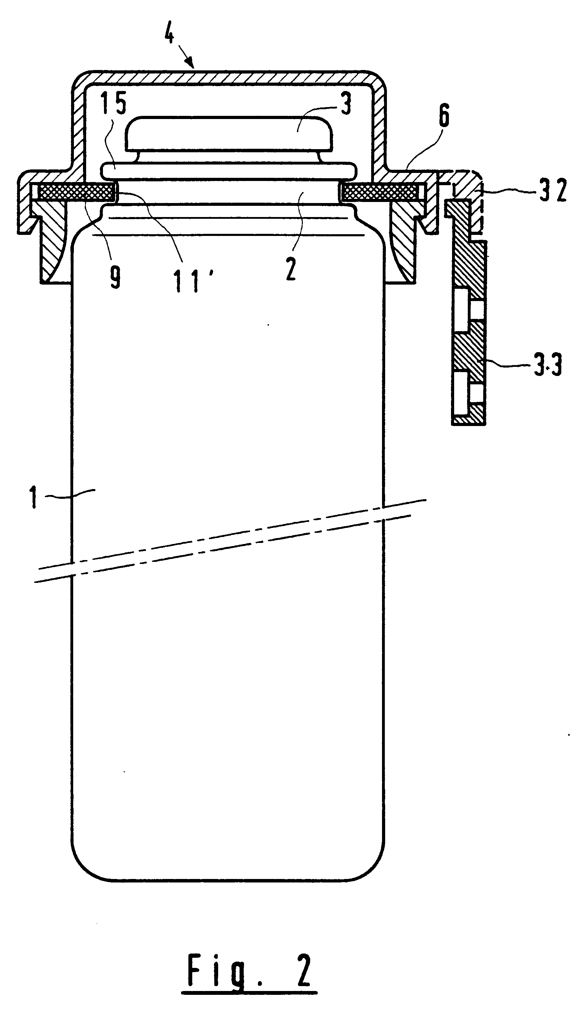

Das Ausführungsbeispiel von Fig. 2 unterscheidet sich von demjenigen gemäß Fig. 1 im wesentlichen nur dadurch, daß an dem Hals 2 des Behälters 1 eine Ringwulst 15 angeformt ist, die von dem Innenrand 11 des elastischen Ringes 9 hintergriffen wird. Der Außendurchmesser der Ringwulst 15 ist etwas größer als der Außendurchmesser der Streukappe 3, der seinerseits etwas größer ist als der Durchmesser des Innenrandes 11' des Ringes 9. Dadurch wird beim Einschieben ein stufenweises Aufbiegen des Innenrandes 11', zuerst durch die Streukappe 3 und dann durch die Wulst 15, und damit ein scheinbar leichteres Einführen erreicht.

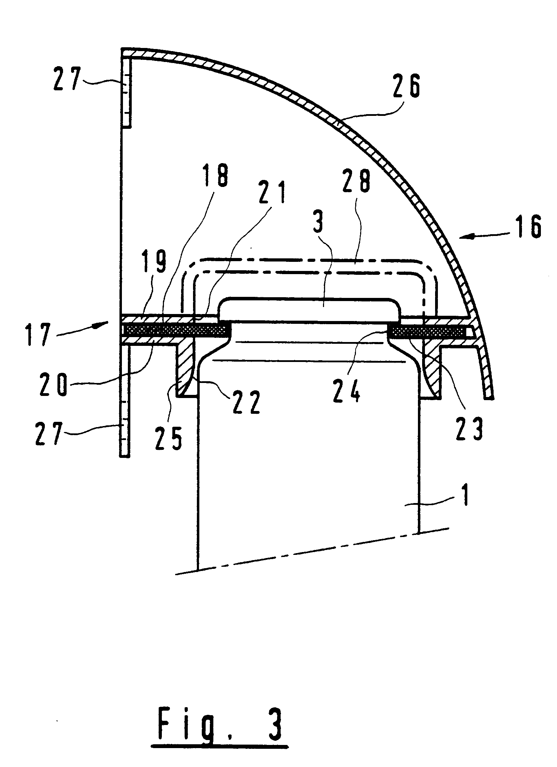

Es sei nun auf Fig. 3 bezuggenommen, in der im Querschnitt ein Halter für mehrere Gewürzgläser 1 der in den Fig. 1 und 2 gezeigten Form dargestellt ist. Dieser Halter 16 ist eine einteiliges Kunststoff-Spritzteil mit einer Platte 17, die im wesentlichen über ihre ganze Länge und fast über ihre ganze Breite mit einem Schlitz 18 versehen ist, der die Platte in eine obere Wand 19 und eine untere Wand 20 teilt. Für jeden Behälter ist in der oberen Wand 19 ein kreisförmiger Durchbruch 21 und in der unteren Wand 20 ein Kreisförmiger Durchbruch 22 vorgesehen. Bei dieser Ausführung ist für alle Behälter ein gemeinsames elastisches Element in Form eines Bandes 23 vorgesehen, das in den Schlitz 18 eingesteckt ist und für jeden Behälter im Bereich der Durchbrüche 21,22 eine kreisförmige öffnung 24 aufweist, durch welche der Behälterhals in der vorher beschriebenen Weise hindurchgeschoben wird, wobei der Rand der öffnung 24 aufgebogen wird und dann die Streukappe 3 oder die Wulst 15 hintergreift. Die öffnung 22 in der untere Wand 20 ist von einem angeformten, sich nach unten erstreckenden zylindrischen Ansatz 25 umgeben, dessen Innenfläche 26 konisch ist, um das Einführen des Behälters zu erleichtern. Bei diesem Ausführungsbeispiel ist vorgesehen, daß der Kraftaufwand zum Herausziehen des Behälters aus dem Halter größer ist als zum Einschieben. Zu diesem Zweck ist der Durchmesser des Durchbruches 21 in der oberen Wand 19 größer als der Durchmesser des Durchbruches 22 in der unteren Wand 20, so daß sich das elastische Band 23 beim Einschieben leichter abbiegt als beim Herausziehen. Der Rand der öffnung 24 kann gezackt sein, um das Einführen und Abnehmen des Behälters zu erleichtern.

An die Platte 17 ist eine Haube 26 angeformt, welche die Behälterköpfe abdeckt und ein Verschmutzen derselben verhindert. Der Halter 16 wird über Stege 27 an einer Wand befestigt.

Um ohne eine eigene Verschlußkappe für jeden Behälter einen Aromaverlust zu vermeiden, könnte für jeden Behälter an der oberen Wand 19 eine strichpunktiert eingezeichnete Kappe 28 angeformt werden.

Selbstverständlich könnte der Halter von Fig. 3 auch zur Halterung nur eines Gewürzbehälters ausgebildet sein.

In den Ausführungsbeispielen von Fig. 1 und 2 ist jeweils ein Behälter 1 mit einem Verschlußkörper 4 dargestellt. Die Ausbildung dieses Verschlußkörpers könnte grundsätzlich auch für die Ausbildung eines Halters für einen oder mehrere Gewürzbehälter verwendet werden, indem eine Platte in der Stärke des Randes 12 vorgesehen wird, an die für jeden Behälter ein Haltering 10 angeformt ist und jeder Verschlußkörper 4 auf der linken Seite den Rand der Platte umgreift und sich auf der rechten Seite mit der entsprechend ausgebildeten Umfangswand 7 durch einen gestrichelt eingezeichneten Schlitz 30 in der Platte erstreckt und mit der Wulst 11 die Platte untergreift. Ein gestrichelt eingezeichneter Schenkel 31 der Platte dient dann zur Anbringung des so gebildetene Halters an einer Wand.

In dem Ausführungsbeispiel von Fig. 2 ist der ringförmige Abschnitt 6 jeweils mit einem Haken 32 (gestrichelt gezeichnet) versehen, über den die Gewürzbehälter in einen Wandhalter 33 einhängbar sind.

## Patentansprüche

1. Vorrichtung zur Aufbewahrung von Gewürzen und dergleichen, mit einem Behälter (1), der einen von einer Streukappe (3) abgedeckten Hals (2) aufweist, und mit einem von dem Behälterhals abnehmbaren Verschlußkörper (4) oder mit einem Halter (16) für den Behälter (1), wobei der Behälter (1) einen radial vorstehenden Umfangswulst (3;15) aufweist dadurch gekennzeichnet, daß der Verschlußkörper (4) bzw. der Halter (16) ein elastisches, flaches Element (9 bzw. 23) mit einer Öffnung (11' bzw. 24) aufweist, deren Rand den Umfangswulst ringsum dichtend hintergreift.

2. Vorrichtung nach Anspruch 1, dadurch gekennzeichnet, daß die Umfangswulst (15) am Hals (2) des Behälters (1) vorgesehen ist.

3. Vorrichtung nach Anspruch 2, dadurch gekennzeichnet, daß der Außendurchmesser der Umfangswulst (15) größer ist als der Außendurchmessser der Streukappe (3).

4. Vorrichtung nach Anspruch 1, dadurch gekennzecihnet, daß die Umfangswulst von dem Rand der Streukappe (3) begrenzt ist.

5. Vorrichtung nach einem der Ansprüche 1 bis 4, dadurch gekennzeichnet, daß das elastische Element ein Ring (9) ist, der an seinem Außenumfang in dem Verschlußkörper (4) bzw. in dem Halter (16)festgehalten ist.

6. Vorrichtung nach Anspruch 5, dadurch gekennzeichnet, daß der Verschlußkörper einen kappenförmigen Abschnitt (5) und einen daran anschließenden ringförmigen Abschnitt (6) größeren Durchmessers aufweist, der einen von einer Umfangswand (7) begrenzten Ringraum (8) zur Aufnahme des elastischen Ringes (9) bildet, und daß in den Ringraum ein Haltering (10) eingesetzt ist, dessen Innendurchmesser kleiner ist als der Innendurchmesser des elastischen Ringes (9) und der den elastischen Ring in dem Ringraum (8) hält.

7. Vorrichtung nach Anspruch 6, dadurch gekennzeichnet, daß der Innendurchmesser des Halteringes (10) größer ist als der Innendurchmesser des kappenförmigen Abschnittes (5).

8. Vorrichtung nach Anspruch 6 oder 7, dadurch gekennzeichnet, daß Verschlußkörper (4) aus einem nachgiebigen Werkstoff besteht und daß an der Umfangswand (7) seines ringförmigen Abschnittes (6) sich radial nach innen erstreckende Haltemittel (11) zum Fixieren des Halteringes (10) vorgesehen sind.

9. Vorrichtung nach einem der Ansprüche 6 bis 8, dadurch gekennzeichnet, daß der Haltering (10) einen nach unten vorstehenden Ansatz (13) aufweist und seine Innenfläche (14) zur Führung des Behälters (1) ausgebildet ist.

10. Vorrichtung nach einem der Ansprüche 1 bis 5 , dadurch gekennzeichnet, daß der Halter (16) eine Platte (17) aufweist, die mit einer der Anzahl der zu haltenden Behälter entsprechenden Anzahl von Durchbrüchen (21,22) versehen ist, und daß jeder Durchbruch von einem elastischen Element (23) umgeben ist, das eine öffnung (24) aufweist, deren Rand die Umfangswulst (3 bzw. 15) am Behälter (1) hintergreift.

11. Vorrrichtung nach den Ansprüchen 5 und 10, dadurch gekennzeichnet, daß jedem Durchbruch ein Verschlußkörper (4) zugeordnet ist, der eine den Durchbruch mit Abstand umgebende kreisförmige Umfangswand (7) aufweist, die eine Ringraum (8) zur Aufnahme des elastischen Ringes (9) begrenzt, und daß der Ringraum einen mit der Platte verbundenen Haltering (10) aufnimmt, der den elastischen Ring (9) in dem Ringraum hält.

12. Vorrichtung nach Anspruch 11, dadurch gekennzeichnet, daß die Umfangswand (7) aus einem nachgiebigen Werkstoff besteht und radial nach innen sich erstreckende Haltemittel (11) zum Fixieren des Verschlußkörpers (4) an der Platte aufweist.

13. Vorrichtung nach Anspruch 10, dadurch gekennzeichnet, daß das elastische Element ein Band (23) ist, das sich im wesentlichen über die ganze Länge der Platte (17) erstreckt und im Bereich jedes Durchbruchs (21,23) eine kreisförmige öffnung (24) aufweist, deren Rand den Umfangswulst (3;15) an dem Behälter (1) hintergreift.

14. Vorrichtung nach Anspruch 13, dadurch gekennzeichnet, daß der Rand der öffnung (24) in dem elastischen Band (23) gezackt sind.

15. Vorrichtung nach Anspruch 13, dadurch gekennzeichnet, daß die Platte (17) einen sich im wesentlichen über ihre ganze Länge und über einen Teil ihrer Breite erstreckenden, die Durchbrüche (21,22) schneidender Schlitz (18) zur Aufnahme des elastischen Bandes (23) aufweist.

16. Vorichtung nach Anspruch 15, dadurch gekennzeichnet, daß die Durchbruch (22) in der unteren Wand (20) des Schlitzes (18) einen kleineren Durchmesser hat als der Durchbruch (21) in der oberen Wand (19).

17. Vorrichtung nach Anspruch 15 oder 16, dadurch gekennzeichnet, daß an der unteren Wand (20) ein den Durchbruch (22) in dieser Wand umgebender zylindrischer Ansatz (25) angeformt ist.

18. Vorrichtung nach Anspruch 17, dadurch gekennzeichnet, daß die Innenfläche des Ansatzes (25) sich nach unten zu konisch erweitert.

19. Vorrichtung nach einem der Ansprüche 10 bis 18, dadurch gekennzeichnet, daß an die Platte (17) eine Haube (26) angeformt ist, welche den Behälterkopf abdeckt.

## Claims

1. Device for storing spices and the like, with a container (1) which has a neck (2) covered by a sprinkling cap (3), and with a stopper body (4) which can be removed from the container neck, or with a holder (16) for the container (1), said container (1) having a radially projecting peripheral bead (3; 15), characterized in that the stopper body (4) or the holder (16) has an elastic, flat element (9 or 23) with an opening (11' or 24) whose edge engages sealingly all around behind the peripheral bead.

2. Device according to Claim 1, characterized in that the peripheral bead (15) is provided on the neck (2) of the container (1).

3. Device according to Claim 2, characterized in that the external diameter of the peripheral bead (15) is greater than the external diameter of the sprinkling cap (3).

4. Device according to Claim 1, characterized in that the peripheral bead is delimited by the edge of the sprinkling cap (3).

5. Device according to one of Claims 1 to 4, characterized in that the elastic element is a ring (9) which at its outer perimeter is held securely in the stopper body (4) or in the holder (16).

6. Device according to Claim 5, characterized in that the stopper body has a cap-shaped section (5) and, adjoining the latter, an annular section (6) of greater diameter which forms an annular space (8) which is delimited by a peripheral wall (7) and receives the elastic ring (9), and in that a holder ring (10) is inserted into the annular space, said holder ring (10) having an internal diameter smaller than the internal diameter of the elastic ring (9) and holding the elastic ring in the annular space (8).

7. Device according to Claim 6, characterized in that the internal diameter of the holder ring (10) is greater than the internal diameter of the cap-shaped section (5).

8. Device according to Claim 6 or 7, characterized in that the stopper body (4) consists of a flexible material, and in that radially inwardly extending holding means (11) for fixing the holder ring (10) are provided on the peripheral wall (7) of its annular section (6).

9. Device according to one of Claims 6 to 8, characterized in that the holder ring (10) has a downwardly projecting shoulder (13) and its inner surface (14) is designed to guide the container (1).

10. Device according to one of Claims 1 to 5, characterized in that the holder (16) has a plate (17) which is provided with a number of apertures (21, 22) corresponding to the number of containers to be held, and in that each aperture is surrounded by an elastic element (23) which has an opening (24) whose edge engages behind the peripheral bead (3 or 15) on the container (1).

11. Device according to Claims 5 and 10, characterized in that each aperture is allocated a stopper body (4) which has a circular peripheral wall (7) which surrounds the aperture at a distance and which delimits an annular space (8) for receiving the elastic ring (9), and in that the annular space receives a holder ring (10) which is connected to the plate and which holds the elastic ring (9) in the annular space.

12. Device according to Claim 11, characterized in that the peripheral wall (7) consists of a flexible material and has radially inwardly extending holding means (11) for fixing the stopper body (4) on the plate.

13. Device according to Claim 10, characterized in that the elastic element is a band (23) which extends essentially over the entire length of the plate (17) and has, in the area of each aperture (21, 22), a circular opening (24) whose edge engages behind the peripheral bead (3; 15) on the container (1).

14. Device according to Claim 13, characterized in that the edge of the opening (24) in the elastic band (23) is serrated.

15. Device according to Claim 13, characterized in that the plate (17) has a slot (18) which extends essentially over its entire length and over a part of its width and intersects the apertures (21, 22), said slot (18) receiving the elastic band (23).

16. Device according to Claim 15, characterized in that the aperture (22) in the lower wall (20) of the slot (18) has a smaller diameter than the aperture (21) in the upper wall (19).

17. Device according to Claim 15 or 16, characterized in that a cylindrical shoulder (25) is formed integrally in the lower wall (20) and surrounds the aperture (22) in this wall.

18. Device according to Claim 17, characterized in that the inner surface of the shoulder (25) widens conically downwards.

19. Device according to one of Claims 10 to 18, characterized in that a hood (26) is formed integrally on the plate (17) and covers the head of the container.

## Revendications

1. Dispositif pour la conservation d'épices et analogues comprenant un récipient (1) qui comporte un col (2) recouvert par un couvercle distributeur (3), et un corps de fermeture (4) pouvant être retiré du col du récipient ou un support (16) pour le récipient (1), le récipient (1) comportant un bourrelet périphérique en saillie radiale (3; 15), caractérisé en ce que le corps de fermeture (4) ou le support (16) comprend un élément élastique et plat (9 ou 23) comportant une ouverture (11' ou 24) dont le bord se dispose de façon étanche périphériquement à l'arrière du bourrelet périphérique.

2. Dispositif selon la revendication 1, caractérisé en ce que le bourrelet périphérique (15) est prévu sur le col (2) du récipient (1).

3. Dispositif selon la revendication 2, caractérisé en ce que le diamètre externe du bourrelet périphérique (15) est supérieur au diamètre externe du couvercle distributeur (3).

4. Dispositif selon la revendication 1, caractérisé en ce que le bourrelet périphérique est limité par le bord du couvercle distributeur (3).

5. Dispositif selon l'une des revendications 1 à 4, caractérisé en ce que l'élément élastique est constitué par un anneau (9) qui est maintenu fermement par sa périphérie externe dans le corps de fermeture (4) ou dans le support (16).

6. Dispositif selon la revendication 5, caractérisé en ce que le corps de fermeture comprend une section (5) en forme de couvercle et une section (6) de forme annulaire et de plus grand diamètre qui s'y raccorde, qui forme un espace annulaire (8) limité par une paroi périphérique (7) pour la réception de l'anneau élastique (9), et en ce que dans l'espace annulaire est introduit un anneau de retenue (10) dont le diamètre interne est plus petit que le diamètre interne de l'anneau élastique (9) et qui maintient l'anneau élastique dans l'espace annulaire (8).

7. Dispositif selon la revendication 6, caractérisé en ce que le diamètre interne de l'anneau de retenue (10) est supérieur au diamètre interne de la section (5) en forme de couvercle.

8. Dispositif selon la revendication 6 ou 7, caractérisé en ce que le corps de fermeture (4) est constitué en un matériau flexible et en ce que sont prévus sur la paroi périphérique (7) de sa section (6) de forme annulaire un moyen de retenue (11) s'étendant radialement vers l'intérieur pour la fixation de l'anneau de retenue (10).

9. Dispositif selon l'une des revendications 6 à 8, caractérisé en ce que l'anneau de retenue (10) comprend un prolongement (13) en saillie vers le bas et sa surface interne (14) est constituée pour le guidage du récipient (1).

10. Dispositif selon l'une des revendications 1 à 5, caractérisé en ce que le support (16) comprend une plaque (17) qui est pourvue d'un certain nombre de passages (21, 22) correspondant au nombre de récipients à supporter, et en ce que chaque passage est entouré par un élément élastique (23) qui comprend une ouverture (24) dont le bord se dispose au-dessous du bourrelet périphérique (3 ou 15) du récipient (1).

11. Dispositif selon les revendications 5 et 10, caractérisé en ce qu'un corps de fermeture (4) est associé à chaque passage, qui comprend une paroi périphérique (7) de forme circulaire et entourant avec jeu le passage, paroi qui limite un espace annulaire (8) destiné à la réception de l'anneau élastique (9), et en ce que l'espace annulaire reçoit un anneau de retenue (10) relié à la plaque, qui maintient l'anneau élastique (9) dans l'espace annulaire.

12. Dispositif selon la revendication 11, caractérisé en ce que la paroi périphérique (7) est constituée en un matériau flexible et comprend des moyens de retenue (11) s'étendant radialement vers l'intérieur pour la fixation du corps de fermeture (4) sur la plaque.

13. Dispositif selon la revendication 10, caractérisé en ce que l'élément élastique est constitué par une bande (23) qui s'étend sensiblement sur la totalité de la longueur de la plaque (17) et comprend dans la zone de chaque passage (21, 23) une ouverture de forme circulaire (24) dont le bord se dispose à l'arrière du bourrelet périphérique (3; 15) du récipient (1).

14. Dispositif selon la revendication 13, caractérisé en ce que le bord de l'ouverture (24) dans la bande élastique (23) est dentelé.

15. Dispositif selon la revendication 13, caractérisé en ce que la plaque (17) comprend une fente (18) s'étendant sensiblement sur la totalité de sa longueur et sur une partie de sa largeur, qui coupe les passages (21, 22) en vue de la réception de la bande élastique (23).

16. Dispositif selon la revendication 15, caractérisé en ce que le passage (22) présente dans la paroi inférieure (20) de la fente (18) un diamètre plus petit que celui du passage (21) dans la paroi supérieure (19).

17. Dispositif selon la revendication 15 ou 16, caractérisé en ce que dans la paroi inférieure (20) est formé un prolongement cylindrique (25) entourant le passage (22) dans cette paroi.

18. Dispositif selon la revendication 17, caractérisé en ce que la surface interne du prolongement (25) va en s'élargissant de façon conique vers le bas.

19. Dispositif selon l'une des revendications 10 à 18, caractérisé en ce qu'un capot (26) est formé sur la plaque (17), qui recouvre la tête des récipients.
